Europäisches Patentamt

European Patent Office

Office européen des brevets

(19)

(11) Numéro de publication: **0 222 663**
**B1**

(12) **FASCICULE DE BREVET EUROPEEN**

(45) Date de publication du fascicule du brevet: **08.08.90**

(51) Int. Cl.⁵: **B 32 B 27/08**

(21) Numéro de dépôt: **86402436.9**

(22) Date de dépôt: **30.10.86**

(54) **Pièces obtenues à partir d'un stratifié et leur procédé de fabrication.**

(30) Priorité: **05.11.85 FR 8516352**

(43) Date de publication de la demande:
**20.05.87 Bulletin 87/21**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**FR-A-1 303 490**
**FR-A-2 447 274**
**GB-A-1 091 678**
**GB-A-1 210 268**
**US-A-3 896 069**

(73) Titulaire: **NORSOLOR S.A.**
**Tour Aurore Place des Reflets**
**F-92080 Paris la Défense Cédex 5 (FR)**

(72) Inventeur: **Leca, Jean-Paul**
**224 Boulevard du Maréchal Juin**
**F-78200 Mantes La Jolie (FR)**

(74) Mandataire: **Dubost, Thierry**
**c/o NORSOLOR Service Propriété Industrielle**
**B.P. 57**
**F-62670 Mazingarbe (FR)**

Courier Press, Leamington Spa, England.

EP 0 222 663 B1

## Description

L'assemblage d'une ou plusieurs couches de résine thermoplastique avec une ou plusieurs couches de résine thermodurcissable renforcée pour former un matériau stratifié a de tout temps constitué un problème technique difficile à résoudre.

Une des premières solutions proposées a consisté, selon le brevet GB—1.210.268 concernant les stratifiés formés à froid dont la couche thermoplastique est constituée de polychlorure de vinyle ou de polyéthylène chloré, à améliorer l'adhésion de celle-ci avec la couche thermodurcissable éventuellement renforcée de fibres en effectuant l'assemblage en présence de 0,1 à 20% en poids (par rapport au thermoplastique) d'un agent de liaison constitué de préférence de polybutadiène ou de caoutchouc butadiène-acrylonitrile. Ultérieurement le brevet GB—1.301.023 a décrit un procédé consistant à (a) former un stratifié comprenant une feuille de matériau thermoplastique et au moins une feuille de matériau fibreux imprégné de résine thermodurcissable, la feuille de matériau thermoplastique étant au moins aussi épaisse que le matériau fibreux imprégné, et (b) presser à chaud ledit stratifié sous une pression allant jusqu'à 35 bars et dans des conditions de durée, température et pression qui entraînent le durcissement de la résine thermodurcissable sans détruire le matériau thermoplastique.

Le brevet GB—A—2.087.307 décrit un produit comprenant un support en matière thermoplastique auquel une couche de surface décorative comprenant une matière thermodurcissable est liée au moyen d'un élastomère dit "hot-melt". Ce produit peut être obtenu par un procédé consistant:

soit à fabriquer le support thermoplastique par extrusion à chaud en continu et à le mettre en contact, pendant qu'il est encore chaud après l'étape d'extrusion, avec la face enduite d'élastomère "hot-melt" de la couche de surface décorative,

soit à disposer au moins une feuille de la couche décorative de surface, enduite d'élastomère "hot-melt", dans un moule faisant partie d'un appareil de moulage ou d'injection-moulage, à introduire le matériau thermoplastique dans ledit moule à température élevée, et enfin à mouler ledit matériau pour former le support.

Dans ce document la couche comprenant la matière thermodurcissable n'est pas renforcée de fibres. Enfin le brevet GB—B—2.043.532 décrit un stratifié moulable à chaud comprenant au moins une couche de résine thermoplastique, au moins une couche de résine thermodurcissable renforcée de fibres et durcie et au moins une couche d'adhésif intermédiaire entre les couches de résine, ladite couche d'adhésif comprenant une résine thermoplastique et étant capable de se présenter à l'état fondu à une température inférieure à la température de moulage, et l'épaisseur de la couche de résine thermoplastique étant de 1 à 100 fois égale à l'épaisseur de la couche de résine thermodurcissable renforcée et durcie.

Les divers procédé évoqués ci-dessus, qu'ils mettent ou non en jeu l'association des couches thermoplastiques et thermodurcissable par une couche d'adhésif, et quelles que soient les épaisseurs respectives desdites couches, ont en commun l'obtention de stratifiés par des techniques de moulage par compression. En général ces techniques conviennent bien à la fabrication de pièces de forme plane ou quasi-plane. Par contre elles se révèlent mal adaptées à la fabrication de pièces de forme complex, convexe ou concave, telles qu'articles de sanitaire (baignoires, lavabos, éviers, etc.), casques de motocyclistes, etc.. Pour la fabrication de telles pièces, notamment lorsque la résine thermoplastique est le polyméthacrylate de méthyle, on a généralement recours à la technique dite de thermoformage, celle-ci pouvant être définie (selon A. F. Dorian, Six-Language Dictionary of Plastics and Rubber Technology (1965) page 535) comme un procédé dans lequel une feuille plastique est partiellement étirée dans une chambre sous vide puis transférée dans un moule en forme dans lequel la pression est contrôlée par admission d'air.

Dans ce contexte il est notamment connu par le brevet FR—A—2.325.505 un matériau stratifié à base d'un support en forme de résine acrylique solidaire d'un polyester armé, caractérisé par une plaque de polyméthacrylate de méthyle sur une face au moins de laquelle adhère directement un complexe polyester/fibre d'armature et/ou charge. Un tel matériau est fabriqué à température ambiante par la succession d'opérations suivantes:

projection sur une surface en polyméthacrylate de méthyle d'une couche mince de résine polyester,

projection simultanée de la résine polyester avec son catalyseur et son accélérateur, la fibre servant d'armature pour former une première couche de complexe,

projections successives, à des intervalles de temps compris entre 15 et 30 minutes, de couches supplémentaires de résine et d'armature en nombre nécessaire pour obtenir l'épaisseur désirée, chaque couche étant roulée soigneusement,

projection d'une couche finale de fibre non mouillée par le polyester, et

vieillissement pendant environ une semaine.

Le procédé décrit par ce document est entièrement réalisé à la main et nécessite une main-d'oeuvre importante travaillant dans un environnement difficile; par ailleurs la qualité des pièces produites présente les aléas d'une production non automatisée. En particulier les intervalles de temps devant s'écouler entre deux projections successives sont les mêmes quelque soit la surface des couches.

Il est également connu par le brevet FR—A—2.343.580 un procédé pour renforcer avec une résine stratifiée armée une pièce essentiellement constituée par une coque thermoformée, caractérisé en ce qu'il consiste à soutenir une face de la coque à l'aide d'un coussin en matière élastiquement déformable épousant intimement ladite face, à placer au voisinage de l'autre face un élément de moule à surface de travail élastiquement déformable ou non et de forme complémentaire disposé de manière à ménager une résine de renforcement dans ledit espace libre et à démouler la coque ainsi renforcée. Le procédé décrit par ce document exige des moules de thermoformage complexes, donc onéreux; de plus la résine stratifiée armée doit pouvoir être injectée et ne peut se trouver que dans la partie concave de la coque.

Le développement commercial des pièces de forme complexe obtenues par thermoformage souffre jusqu'à présent des limitations de caractère technique, économique (productivité) et même de qualité dues aux procédés de fabrication actuellement connus. Le but de la présente invention est de résoudre les divers problèmes liés aux insuffisances des procédés antérieurs, notamment en permettant la fabrication d'objets de forme complexe à partir de stratifiés comprenant une couche de résine thermoplastique et une couche de résine thermodurcissable renforcée, à faible prix de revient et en assurant une qualité reproductible.

Un premier objet de la présente invention consiste donc en une pièce obtenue à partir d'un stratifié comprenant au moins une couche de résine thermoplastique (A), au moins une couche de résine thermodurcie (B) renforcée de fibres et au moins une couche d'adhésif (C) intermédiaire entre les couches (A) et (B), caractérisée en ce que ladite pièce est de forme complexe et en ce que le rapport de l'épaisseur de la couche (B) à l'épaisseur de la couche (A) dans ladite pièce est au moins égal à 1,5 environ. Par pièce de forme complexe on entend une pièce de forme non-plane, pouvant par exemple présenter une géométrie spatiale comportant des parties concaves et/ou des parties convexes, telle qu'une forme de coque. Comme indiqué précédemment, les objets usuels répondant à cette définition sont extrêmement nombreux et se rapportent à des domaines de l'industrie extrêmement variés. Il est essentiel que le rapport des épaisseurs (B)/(A) soit au moins égal à 1,5 environ, ce rapport pouvant sans difficulté atteindre une valeur égale à 10 environ. En effet des pièces dans lesquelles ce rapport est inférieur ou égal à 1 sont déjà bien connues et peuvent être fabriquées sans difficulté par des procédés de moulage par compression, ce qui n'est pas le cas des pièces selon l'invention.

La nature de l'adhésif de la couche (C) n'est pas indifférente à la qualité des pièces selon l'invention. L'adhésif utilisé doit assurer la bonne cohésion du stratifié par exemple en résistance à la traction, et surtout pouvoir s'opposer aux forces de cisaillement et d'arrachement dues au retrait différentiel de la résine thermoplastique sur la résine thermodurcie renforcée de fibres. Il sera donc choisi parmi les colles dites thermofusibles. Par colle thermofusible on entend une composition comprenant (D) au moins un polymère thermoélastique, (E) au moins une résine tackifiante et (F) au moins une cire et/ou un plastifiant du polymère (D). Comme polymères (D) on peut citer notamment le polyacrylate de vinyle, les copolymères d'éthylène et d'esters vinyliques d'acide carboxylique, les copolymères d'éthylène et d'acrylates ou méthacrylates d'alkyle, les terpolymères d'éthylène, de (méth)acrylates d'alkyle et d'anhydride maléique. Comme résines tackifiantes (E) on peut citer notamment les polyterpènes, les collophanes et leurs esters, les éthers polyvinyliques et les résines de pétrole. Comme plastifiants ou cires (F) on peut citer notamment les huiles semi-aliphatiques, les huiles pétrolières aromatiques, naphténiques ou paraffiniques, les alkylbenzènes et les esters dérivés d'acides organiques saturés, les paraffines et les polymères cireux microcristallins. De manière particulièrement avantageuse, une telle composition thermofusible peut en outre comprendre un polypropylène atactique de bas poids moléculaire (compris entre 1.000 et 7.000) ou bien un polypropylène de bas poids moléculaire oxydé (comme dans le brevet US—A—3.896.069).

Dans les pièces selon l'invention on entend par réine thermoplastique une résine choisie parmi:

les (co)polymères d'α-oléfines ayant de 2 à 8 atomes de carbone,

les polymères et copolymères de monomères vinylaromatiques tels que le styrène et ses dérivés,

les terpolymères obtenus par greffage de (a) au moins un monomère vinylaromatique et de (b) au moins un nitrile insaturé sur (c) au moins un caoutchouc, ledit terpolymère étant dispersé dans une matrice d'un copolymère comprenant des motifs dérivés de (d) au moins un nitrile insaturé et de (e) au moins un monomère vinylaromatique (pour la bonne compréhension de cette définition il convient de préciser que le monomère vinylaromatique (a) et le monomère vinylaromatique (e), identiques ou différents l'un de l'autre, sont de préférence choisis parmi le styrène et ses dérivés tels que l'méthylstyrène, le vinyltoluène et le vinylnaphtalène, le nitrile insaturé (b) et le nitrile insaturé (d), identiques ou différents l'un de l'autre, sont de préférence l'acrylonitrile).

les polymères cellulosiques,

les polymères et copolymères du chlorure de vinyle, et

les polymères et copolymères du méthacrylate et méthyle, comprenant au moins 85% en poids de ce monomère et obtenus sous forme de plaques par coulée (polymérisation en masse) ou par extrusion de poudres ou granulés polymérisés en masse ou en suspension.

La couche de résine thermoplastique présente dans les pièces selon l'invention est de préférence une couche mince telle qu'une feuille d'épaisseur comprise entre 0,3 et 1,5 mm environ. Cette feuille peut sans inconvénient être pigmentée, notamment pour des raisons d'ordre esthétique et décoratif.

Dans les pièces selon l'invention, on entend par résine thermodurcie une résine choisie parmi:

les résines phénoliques, les résines époxydes et les bétons de synthèse obtenus ù partir de liants organiques de type acrylique, polyester ou polyuréthane.

les polyesters insaturés, utilisés soit seuls soit à l'état de composites tels que des préimprégnés (couramment désignés sous l'appellation de "sheet moulding compounds") ou tels que des mélanges avec des fibres de verre coupées (couramment désignés sous l'appellation de "dough moulding compounds")

les polyesters de vinyle tels que notamment le polyacrylate de vinyle.

Les fibres renforçant la résine thermodurcie peuvent être notamment des fibres de verre.

Un second objet de la présente invention consiste en un procédé de fabrication d'une pièce telle que décrit ci-dessus, caractérisé en ce que dans une première étape une couche de résine thermoplastique (A) est enduite à chaud d'au moins une couche d'adhésif (C), puis dans une seconde étape ladite couche (A) enduite d'adhésif est soumise à un thermoformage (tel que definie précédemment) en utilisant comme moule en forme une couche de forme complexe (B) de résine thermodurcie renforcée de fibres et les conditions de thermoformage étant telles que le rapport de l'épaisseur de la couche (B) à l'épaisseur de la couche (A) dans la pièce de forme complexe obtenue est au moins égal à 1,5 environ.

Conformément à la première étape du procédé selon l'invention, la couche d'adhésif peut être appliquée sur la couche de résine thermoplastique par tout moyen convenable, notamment par enduction ou par pistoletage. Par enduction on entend l'application de l'adhésif sous forme liquide, c'est-à-dire préalablement portée à une température comprise entre 50°C et 250°C, de préférence comprise entre 150°C et 205°C, au moyen d'un système comprenant d'une part un ensemble de fusion (préfusion, bac de fusion, pompe) et d'autre part un ensemble composé de deux râcles entre lesquelles l'adhésif liquéfiée est injectée sous pression. A titre indicatif, la pression du bac de fusion et la pression de l'alimentation des râcles peuvent atteindre jusqu'à 100 bars. Avantageusement dans la première étape du procédé selon l'invention, la colle thermofusible est appliquée sur la couche de résine thermoplastique à raison de 100 à 500 grammes par m² de surface de la couche (A).

L'opération de thermoformage conduite dans la seconde étape du procédé selon l'invention est effectuée de préférence à une température comprise entre 150°C et 210°C environ et/ou en maintenant dans la chambre sous vide partiel une pression absolue comprise entre 15 et 200 millibars environ. La durée de l'opération de thermoformage est généralement de l'ordre de 10 à 60 minutes et elle est suivie d'une phase de refroidissement libre et/ou avec ventilation de durée variable avant que la pièce ne puisse être soumise aux opérations de controle puis de stockage.

En raison de l'étirage de la couche (A) dans une chambre sous vide au cours de l'opération de thermoformage, l'épaisseur de cette couche diminue sensiblement au cours de la mise en oeuvre du procédé selon l'invention, tandis que l'épaisseur de la couche (B) thermodurcie renforcée est sensiblement inchangée. L'épaisseur de la couche (A) est généralement divisée par un facteur de l'ordre de 3 au cours de la mise en oeuvre du procédé; c'est pourquoi on aura soin de soumettre au procédé une couche (A) d'épaisseur au plus égale à 2 fois l'épaisseur de la couche (B).

Les pièces de forme complexe obtenues par la mise en oeuvre du procédé selon l'invention présentent à la fois une cohésion remarquable, notamment en résistance à la traction, et un aspect de surface satisfaisant. On pourra donc avantageusement appliquer la présente invention à la fabrication de baignoires en polyméthacrylate de méthyle renforcé par une résine polyester armée (cas d'une pièce de forme concave) ainsi qu'à la fabrication d'éléments de carrosserie automobile (cas d'une pièce de forme convexe).

Les exemples non limitatifs suivants ont pour objet d'illustrer la la présente invention.

Les normes ou essais utilisés pour définir les caractéristiques des matériaux obtenus sont:

l'examen visuel: test consistant à observer l'aspect optique des objets obtenus après thermoformage; il consiste à vérifier la constance des propriétés optiques initiales de la plaque thermoplastique.

le choc à la bille: essai consistant à laisser tomber une bille sphérique de diamètre 37 mm pesant 200 grammes d'une hauteur d'un mètre sans provoquer de fracture de la couche thermoplastique. Ce test est effectué selon le projet de norme TC 86 de la Commission Européenne de Normalisation.

l'adhésion: ce test est effectué selon la norme ASTM C 297 ou ISO 527.

la résistance aux variations de température: test consistant à faire succéder alternativement, de manière cyclique, eau chaude (à 90°C) et eau froide (à 12°C) et à vérifier la cohésion du stratifié et la constance des propriétés générales. Ce test est effectué selon le projet de norme TC 86 de la Commission Européenne de Normalisation pour les baignoires acryliques.

Exemple 1

Une plaque de 3 mm d'épaisseur de polyméthacrylate de méthyle commercialisé par la demanderesse sous la marque ALTUGLAS (qualité sanitaire) est enduite d'une colle thermofusible commercialisée par la société EASTMAN KODAK sous la marque EASTABOND A 167 S au moyen d'une machine d'enduction de la société FRACO, équipée de racles, dans les conditions suivantes:

température du bain de colle: 185°C
pression au bac de fusion: 40 bars
pression d'alimentation des racles: 20 bars
épaisser clinquant entre racles: 5/10 mm

Exemple 2

On thermoforme la plaque encollée de l'exemple 1 sur une préforme armée non dépolie, préparée par pressage de polyester de marque NORSOPREG commercialisé par la société CdF CHIMIE RESINES. Le thermoformage est effectué à l'aide d'un conformateur rigide maintenant la préforme, dans les conditions suivantes:

temps de chauffage: 30 minutes en étuve ventilée pour la plaque encollée et la préforme.

température de chauffage: 190°C.

L'ensemble résultant est maintenu, après thermoformage, sous vide de 96 kPa (720 mm de mercure) pendant 30 minutes (dont 15 minutes de refroidissement puis 15 minutes avec ventilation).

On obtient des résultats suivants:

examen visuel: excellent.

choc à la bille: excellent.

adhésion: 1,5 MPa.

résistance aux variations de température: excellente.

**Revendications**

1. Pièce de forme complexe, c'est-à-dire non-plane, obtenue à partir d'une stratifié comprenant au moins une couche de résine thermoplastique (A) choisie parmi:

les (co)polymères d'α-oléfines ayant de 2 à 8 atomes de carbone,

les polymères et copolymères de monomères vinylaromatiques,

les terpolymères obtenus par greffage de (a) au moins un monomère vinylaromatique et de (b) au moins un nitrile insaturé sur (c) au moins un caoutchouc, ledit terpolymère étant dispersé dans une matrice d'un copolymère comprenant des motifs dérivés de (d) à moins un nitrile insaturé et de (e) au moins un monomère vinylaromatique.

les polymères cellulosiques,

les polymères et copolymères du chlorure de vinyle, et

les polymères et copolymères du méthacrylate de méthyle comprenant au moins 85% en poids de ce monomère;

au moins une couche de résine thermodurcie (B) renforcée de fibres choisi parmi:

les résines phénoliques, les résines époxydes et les bétons de synthèse obtenus à partir de liants organiques de type acrylique, polyester ou polyuréthane,

les polyesters insaturés utilisés soit seuls, soit à l'état de composites,

les polyesters de vinyle;

et au moins une couche d'adhésif (C) intermédiaire entre les couches (A) et (B), caractérisée en ce que le rapport de l'épaisseur de la couche (B) à l'épaisseur de la couche (A) dans ladite pièce est au moins égal à 1,5, l'adhésif de la couche (C) étant une colle thermofusible comprenant (D) au moins un polymère thermoélastique, (E) au moins une résine tackifiante et (F) au moins une cire et/ou un plastifiant du polymère (D).

2. Pièce selon la revendication 1, caractérisée en ce que le rapport de l'épaisseur de la couche (B) à l'épaisseur de la couche (A) dans ladite pièce est au plus égal à 10.

3. Pièce selon l'une des revendications 1 et 2, caractérisé en ce que l'adhésif de la couche (C) est capable d'assurer la cohésion du stratifié tout en s'opposant aux forces de cisaillement et d'arrachement dues au retrait différentiel de la résine thermoplastique sur la résine thermodurcie renforcée de fibres.

4. Pièce selon la revendication 1, caractérisée en ce que l'adhésif de la couche (C) comprend en outre un polypropylène atactique de bas poids moléculaire.

5. Pièce selon l'une des revendications 1 à 4, caractérisée en ce que la couche (A) est une feuille d'épaisseur comprise entre 0,3 et 1,5 mm.

6. Pièce selon l'une des revendications 1 à 5, caractérisée en ce que la résine thermoplastique de la couche (A) est le polyméthacrylate de méthyle.

7. Procédé de fabrication d'une pièce de forme complexe selon la revendication 1, caractérisé en ce que, dans une première étape, une couche de résine thermoplastique (A) choisie parmi:

les (co)polymères d'α-oléfines ayant de 2 à 8 atomes de carbone,

les polymères et copolymères de monomères vinylaromatiques,

les terpolymères obtenus par greffage de (a) au moins un monomère vinylaromatique et de (b) au moins un nitrile insaturé sur (c) au moins un caoutchouc, ledit terpolymère étant dispersé dans une matrice d'un copolymère comprenant des motifs dérivés de (d) au moins un nitrile insaturé et de (e) au moins un monomère vinylaromatique,

les polymères cellulosiques,

les polymères et copolymères du chlorure de vinyle, et

les polymères et copolymères du méthacrylate de méthyle comprenant au moins 85% en poids de ce monomère;

est enduite à chaud d'au moins une couche d'adhésif (C), puis, dans une seconde étape, ladite couche (A) enduite d'adhésif est soumise à un thermoformage en utilisant comme moule en forme une couche de forme complexe (B) de résine thermodurcie renforcée de fibres, choisie parmi:

les résines phénoliques, les résines époxydes et les bétons de synthèse obtenus à partir de liants organiques de type acrylique, polyester ou polyuréthane,

les polyesters insaturés utilisés soit seuls, soit à l'état de composites,

les polyesters de vinyle,

les conditions de thermoformage étant telles que le rapport de l'épaisseur de la couche (B) à l'épaisseur de la couche (A) dans la pièce de forme complexe obtenue est au moins égal à 1,5.

8. Procédé selon la revendication 7, caractérisé en ce que la couche (C) est appliquée sur la couche (A) par enduction de l'adhésif préalablement porté à une température comprise entre 150°C et 205°C.

9. Procédé selon l'une des revendications 7 et 8, caractérisé en ce que le thermoformage de la seconde étape est effectué à une température comprise entre 150°C et 210°C.

10. Procédé selon l'une des revendications 7 à 9, caractérisé en ce que le thermoformage de la seconde étape est effectué en maintenant une pression absolue comprise entre 15 et 200 millibars dans la chambre sous vide.

11. Procédé selon l'une des revendications 7 à 10, caractérisé en ce que l'épaisseur de la couche (A) soumise au thermoformage est au plus égale à 2 fois l'épaisseur de la couche (B).

## Patentansprüche

1. Stück komplizierter Form, d.h. nicht ebener Form, hergestellt aus einem Schichtstoff mit mindestens einer Schicht (A) aus thermoplastischem Harz, das ausgewählt ist aus:

den (Co)polymeren von α-Olefinen mit 2 bis 8 Kohlenstoffatomen,

den Polymeren und Copolymeren von aromatischen Vinylmonomeren,

den Terpolymeren, die durch Aufpfropfen von (a) mindestens einem aromatischen Vinylmonomer und (b) mindestens einem ungesättigten Nitril auf (c) mindestens einen Kautschuk erhalten werden, wobei das Terpolymer in einer Matrix eines Copolymers dispergiert ist, das Einheiten enthält, die von (d) mindestens einem ungesättigten Nitril und von (e) mindestens einem aromatischen Vinylmonomer abstammen,

den Cellulosepolymeren,

den Polymeren und Copolymeren von Vinylchlorid, und

den Polymeren und Copolymeren von Methylmethacrylat, die mindestens 85 Gew.-% dieses Monomers enthalten,

mindestens einer Schicht (B) aus wärmeausgehärteten faserverstärkten Harz, das ausgewählt ist aus:

den Phenolharzen, den Epoxyharzen und den synthetischen Betonen, die aus organischen Bindemitteln des Acryl-, Polyester- oder Polyurethantyps erhalten werden,

den ungesättigten Polyester, die entweder allein oder im Verbund verwendet werden, und

den Polyvinylestern,

und mindestens einer zwischen den Schichten (A) und (B) liegenden Kleberschicht (C), dadurch gekennzeichnet, daß das Verhältnis der Dicke der Schicht (B) zur Dicke der Schicht (A) in dem genannten Stück mindestens 1,5 beträgt, wobei der Kleber der Schicht (C) ein Heißschmelzkleber ist, der (D) mindestens ein thermoelastisches Polymer, (E) mindestens ein klebrigmachendes Harz und (F) mindestens Wachs und/oder einen Weichmacher für das Polymer (D) enthält.

2. Stück nach Anspruch 1, dadurch gekennzeichnet, daß das Verhältnis der Dicke der Schicht (B) zur Dicke der Schicht (A) in dem genannten Stück höchstens 10 beträgt.

3. Stück nach Anspruch 1 oder 2, dadurch gekennzeichnet, daß der Kleber der Schicht (C) imstande ist, den Zusammenhalt des Schichtstoffes zu gewährleisten, und gleichzeitig den auf die unterschiedliche Schwindung des thermoplastischen Harzes und des wärmeausgehärteten, faserverstärkten Harzes zurückzuführenden Scher- und Abreißkräften entgegenwirkt.

4. Stück nach Anspruch 1, dadurch gekennzeichnet, daß der Kleber der Schicht (C) weiters ein ataktisches Polypropylen niedrigen Molekulargewichts enthält.

5. Stück nach einem der Ansprüche 1 bis 4, dadurch gekennzeichnet, daß die Schicht (A) eine Folie einer Dicke zwischen 0,3 und 1,5 mm ist.

6. Stück nach einem der Ansprüche 1 bis 5, dadurch gekennzeichnet, daß das thermoplastische Harz der Schicht (A) Polymethylmethacrylat ist.

7. Verfahren zur Herstellung eines Stückes komplizierter Form nach Anspruch 1, dadurch gekennzeichnet, daß in einem ersten Schritt eine Schicht (A) aus thermoplastischem Harz, das ausgewählt ist aus:

den (Co)polymeren von α-Olefinen mit 2 bis 8 Kohlenstoffatomen,

den Polymeren und Copolymeren von aromatischen Vinylmonomeren,

den Terpolymeren, die durch Aufpfropfen von (a) mindestens einem aromatischen Vinylmonomer und (b) mindestens einem ungesättigten Nitril auf (c) mindestens einen Kautschuk erhalten werden, wobei das Terpolymer in einer Matrix eines Copolymers dispergiert ist, das Einheiten enthält, die von (d) mindestens einem ungesättigten Nitril und von (e) mindestens einem aromatischen Vinylmonomer abstammen,

den Cellulosepolymeren,

den Polymeren und Copolymeren von Vinylchlorid, und

den Polymeren und Copolymeren von Methylmethacrylat, die mindestens 85 Gew.-% dieses Monomers enthalten.

mit mindestens einer Kleberschicht (C) warmbeschichtet wird, sodann in einem zweiten Schritt die mit Kleber beschichtete Schicht (A) einer Thermoformung unterzogen wird, wobei als Form eine Schicht (B) komplizierter Formgebung aus wärmeausgehärtetem, faserverstärkten Harz verwendet wird, das ausgewählt ist aus

den Phenolharzen, den Epoxyharzen und den synthetischen Betonen, die aus organischen Bindemitteln des Acryl-, Polyester- oder Polyurethantyps erhalten werden,

den ungesättigten Polyestern, die entweder allein oder im Verbund·verwendet werden, und

den Polyvinylestern,

wobei die Bedingungen der Thermoformung so sind, daß das Verhältnis der Dicke der Schicht (B) zur Dicke der Schicht (A) in dem erhaltenen Stück komplizierter Form mindestens 1,5 beträgt.

8. Verfahren nach Anspruch 7, dadurch gekennzeichnet, daß die Schicht (C) auf die Schicht (A) durch Auftragen des vorher auf eine Temperatur zwischen 150°C und 205°C gebrachten Klebers aufgebracht wird.

9. Verfahren nach Anspruch 7 oder 8, dadurch gekennzeichnet, daß die Thermoformung des zweiten Schrittes bei einer Temperatur zwischen 150°C und 210°C erfolgt.

10. Verfahren nach einem der Ansprüche 7 bis 9, dadurch gekennzeichnet, daß die Thermoformung des zweiten Schrittes unter Aufrechterhaltung eines Absolutdruckes zwischen 15 und 200 Millibar in der Vakuumkammer erfolgt.

11. Verfahren nach einem der Ansprüche 7 bis 10, dadurch gekennzeichnet, daß die Dicke der der Thermoformung unterzogenen Schicht (A) höchstens gleich ist der zweifachen Dicke der Schicht (B).

**Claims**

1. Article of complex, that is to say nonplanar, shape obtained from a laminate comprising at least one layer of thermoplastic resin (A) chosen from:

(co)polymers of α-olefins containing from 2 to 8 carbon atoms,

polymers and copolymers of vinylaromatic monomers,

terpolymers obtained by grafting (a) at least one vinylaromatic monomer and (b) at least one unsaturated nitrile onto (c) at least one rubber, the said terpolymer being dispersed in a matrix of a copolymer comprising units derived from (d) at least one unsaturated nitrile and from (e) at least one vinylaromatic monomer,

cellulose-based polymers,

vinyl chloride polymers and copolymers, and

methyl methacrylate polymers and copolymers comprising at least 85% by weight of this monomer;

at least one layer of heat-cured resin (B) reinforced with fibres and chosen from:

phenolic resins, epoxy resins and synthetic concretes obtained from organic binders of acrylic, polyester or polyurethane type,

unsaturated polyesters employed either by themselves or in the form of composites, polyvinyl esters;

and at least one layer of intermediate adhesive (C) between the layers (A) and (B), characterized in that the ratio of the thickness of the layer (B) to the thickness of the layer (A) in the said article is at least equal to 1.5, the adhesive of the layer (C) being a hot-melt adhesive comprising (D) at least one thermoelastic polymer, (E) at least one tackifying resin and (F) at least one wax and/or plasticizer of the polymer (D).

2. Article according to Claim 1, characterized in that the ratio of the thickness of the layer (B) to the thickness of the layer (A) in the said article does not exceed 10.

3. Article according to either of Claims 1 and 2, characterized in that the adhesive in layer (C) is capable of ensuring the cohesion of the laminate while opposing the shearing and tearing forces due to the differential shrinkage of the thermoplastic resin on the fibre-reinforced heat-cured resin.

4. Article according to Claim 1, characterized in that the adhesive in the layer (C) additionally comprises an atactic polypropylene of low molecular weight.

5. Article according to one of Claims 1 to 4, characterized in that the layer (A) is a sheet with a thickness of between 0.3 and 1.5 mm.

6. Article according to one of Claims 1 to 5, characterized in that the thermoplastic resin of layer (A) is polymethyl methacrylate.

7. Process for the manufacture of an article of complex shape according to Claim 1, characterized in that, in a first stage, a thermoplastic resin layer (A) chosen from:

(co)polymers of α-olefins containing from 2 to 8 carbon atoms,

polymers and copolymers of vinylaromatic monomers,

terpolymers obtained by grafting (a) at least one vinylaromatic monomer and (b) at least one unsaturated nitrile onto (c) at least one rubber, the said terpolymer being dispersed in a matrix of a copolymer comprising units derived from (d) at least one unsaturated nitrile and from (e) at least one vinylaromatic monomer,

cellulose-based polymers,

vinyl chloride polymers and copolymers, and

methyl methacrylate polymers and copolymers comprising at least 85% by weight of this monomer;

is coated hot with at least one layer of adhesive (C) and then, in a second stage, the said adhesive-coated layer (A) is subjected to a skeleton forming operation, using as a skeleton mould a complex-shaped layer (B) of fibre-reinforced heat-cured resin chosen from:

phenolic resins, epoxy resins and synthetic concretes obtained from organic binders of acrylic, polyester or polyurethane type,

unsaturated polyesters employed either by themselves or in the form of composites,

polyvinyl esters,

the skelekton forming operation conditions being such that the ratio of the thickness of the layer (B) to the thickness of the layer (B) in thx complex-shaped article obtained is at least equal to 1.5.

8. Process according to Claim 7, characterized in that the layer (C) is applied onto the layer (A) by coating with the adhesive preheated to a temperature between 150°C and 205°C.

9. Process according to either of Claims 7 and 8, characterized in that the skeleton forming operation in the second stage is performed at a temperature of between 150°C and 210°C.

10. Process according to one of Claims 7 to 9, characterized in that the skeleton forming operation in the second stage is performed while an absolute pressure of between 15 and 200 millibars is maintained in the vacuum chamber.

11. Process according to one of Claims 7 to 10, characterized in that the thickness of the layer (A) subjected to the skeleton forming operation is not more than double the thickness of the layer (B).